(19) Europäisches Patentamt
European Patent Office
Office européen des brevets

(11) **EP 4 593 143 A1**

(12) **EUROPEAN PATENT APPLICATION**
published in accordance with Art. 153(4) EPC

(43) Date of publication:
**30.07.2025 Bulletin 2025/31**

(21) Application number: 23883174.7

(22) Date of filing: 27.10.2023

(51) International Patent Classification (IPC):
*H01M 10/0567* (2010.01)    *H01M 4/525* (2010.01)
*H01M 4/505* (2010.01)    *H01M 4/62* (2006.01)
*H01M 10/0525* (2010.01)    *H01M 50/105* (2021.01)

(52) Cooperative Patent Classification (CPC):
H01M 4/505; H01M 4/525; H01M 4/62;
H01M 10/0525; H01M 10/0567; H01M 50/105;
Y02E 60/10

(86) International application number:
**PCT/KR2023/016898**

(87) International publication number:
**WO 2024/091070 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.10.2022  KR 20220140777
24.10.2023  KR 20230143341

(71) Applicant: **LG Energy Solution, Ltd.**
**Seoul 07335 (KR)**

(72) Inventors:
• **HEO, Min Ji**
 **Daejeon 34122 (KR)**
• **KO, Myung Soo**
 **Daejeon 34122 (KR)**
• **CHOI, Eun Seok**
 **Daejeon 34122 (KR)**
• **PARK, Sung Bin**
 **Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY**

(57)    A lithium secondary battery according to the present invention comprises: a battery case; and an electrode assembly and an electrolyte stored in the battery case, wherein the electrode assembly includes a positive electrode, the positive electrode includes a positive electrode active material and a conductive material, the conductive material includes a point-like conductive material and a linear conductive material in a weight ratio of 4:1 to 14:1, and the electrolyte includes a sultone-based compound and a phosphate-based compound as additives in a weight ratio of at least 1:0.1 and less than 1:2.

FIG. 1

**Description**

## TECHNICAL FIELD

Cross-reference to Related Applications

This application claims the benefit of Korean Patent Application Nos. 10-2022-0140777, filed on October 27, 2022, and 10-2023-0143341, filed on October 24, 2023, the disclosures of which are incorporated by reference herein.

Technical Field

The present invention relates to a lithium secondary battery.

## BACKGROUND ART

Demand for batteries as an energy source has been significantly increased as technology development and demand with respect to power tools, electric vehicles, and energy storage systems (ESSs) have recently increased, and thus a variety of researches on batteries capable of meeting various needs have been carried out. As needs of the market for the lithium secondary batteries, having high capacity, as a power source of such a device have been increased, researches for increasing cell energy density have been actively carried out. In addition, as batteries which can be applied to devices, requiring a high output, such as power tools, the demand for batteries having excellent capacity characteristics as well as excellent rate characteristics has been increasing.

However, when the secondary battery embedded in the power tool is discharged with a high output, the system operation of the power tool is terminated due to the voltage drop of the secondary battery. That is, since the potential value of the secondary battery is greatly reduced during the high-rate discharge, the system determines that the battery capacity is insufficient even though the battery capacity remains, thereby causing the power of the power tool to be turned off.

In addition, a cylindrical-type battery is generally used as a battery for a power tool. In the case of a cylindrical-type battery, since the battery can is heavy in weight, the total weight of the power tool is increased when the cylindrical-type battery is used, and thus there is a limitation in that work convenience is reduced.

## DISCLOSURE OF THE INVENTION

## TECHNICAL PROBLEM

An aspect of the present invention provides a lithium secondary battery capable of preventing a power-off phenomenon of a power tool due to a low degree of voltage drop of the battery during the high-rate discharge by controlling a weight ratio of a point-type conductive agent and a linear conductive agent and a weight ratio of a sultone-based compound and a phosphate-based compound as an electrolyte additive.

Another aspect of the present invention provides a pouch-type lithium secondary battery having a low degree of voltage drop during the high-rate discharge, having a relatively light weight to have excellent work convenience, and having low resistance and excellent output characteristics.

## TECHNICAL SOLUTION

According to an aspect of the present invention, there is provided a lithium secondary battery including a battery case, and an electrode assembly and an electrolyte accommodated in the battery case, wherein the electrode assembly includes a positive electrode, the positive electrode includes a positive electrode active material and a conductive agent, the conductive agent includes a point-type conductive agent and a linear conductive agent at a weight ratio of 4:1 to 14:1, and the electrolyte includes, as additives, a sultone-based compound and a phosphate-based compound at a weight ratio of 1:0.1 to less than 1:2.

According to the present invention, the positive electrode active material may include a lithium nickel-based oxide containing at least 80 mol%, specifically 85-90 mol% of nickel, with respect to the total number of moles of transition metals excluding lithium.

Preferably, the lithium nickel-based oxide may be a compound represented by Formula 1 below:

[Formula 1]     $'Li_{1+x}[Ni_aCo_bM1_cM2_d]_{1-x}O_{2-y}X_y$

wherein, in Formula 1 above, $0.8 \leq a \leq 0.95$, $0 \leq b \leq 0.2$, $0 \leq c \leq 0.2$, $0 \leq d \leq 0.1$, $a+b+c+d=1$, $0 \leq x \leq 0.3$, $0 \leq y \leq 0.2$, M1 is Mn, Al, or a combination thereof, M2 is at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X is at least one element selected from the group consisting of F, Cl, Br, I, At, P, and S.

According to the present invention, the point-type conductive agent may be carbon black, and the linear conductive agent may be multi-walled carbon nanotubes.

According to the present invention, the sultone-based compound may be included in an amount of less than 1 wt%, specifically 0.3 wt% to 0.9 wt% with respect to the total weight of the electrolyte.

According to the present invention, the phosphate-based compound may be included in an amount of less than 1 wt%, 0.6 wt% to 0.9 wt% with respect to the total weight of the electrolyte.

According to the present invention, the sultone-based compound may be at least one compound selected from the group consisting of 1,3-propane sultone and 1,3-propene sultone.

According to the present invention, the phosphate-based compound may be at least one compound selected from the group consisting of lithium difluoro(bisoxalato)phosphate, lithium difluorophosphate, tetramethyl trimethyl silyl phosphate, trimethyl silyl phosphite, tris(2,2,2-trifluoroethyl) phosphate, and tris(trifluoroethyl)phosphite.

According to the present invention, the voltage holding ratio $V_d$, during the 24C discharge, represented by Equation 1 below may be at least 81%, specifically 81% to 87%.

$$[\text{Equation 1}]$$

$$V_d\ (\%)\ =\ (V_f\ /\ V_i)\ \times\ 100$$

In Equation 1 above, $V_f$ is a voltage of the lithium secondary battery after a discharge pulse is applied at a 24C rate, and $V_i$ is a voltage of the lithium secondary battery fully-charged before a discharge pulse is applied at a 24C rate.

According to the present invention, the battery case may be a pouch-type battery case.

## ADVANTAGEOUS EFFECTS

The lithium secondary battery according to the present invention includes a point-type conductive agent and a linear conductive agent as positive electrode conductive agents at a weight ratio of 4:1 to 14:1, and a sultone-based compound and a phosphate-based compound as electrolyte additives at a weight ratio of 1:0.1 to less than 1:2. As a result, even when the lithium secondary battery of the present invention is discharged at a high rate, the degree of voltage drop of the battery is not large. Thus, when the battery according to the present invention is used as a power source for a power tool, the power-off phenomenon of the power tool due to the high-rate discharge may be prevented.

In addition, when the lithium secondary battery according to the present invention is a pouch-type lithium secondary battery, the lithium secondary battery has a relatively light weight and thus has excellent work convenience.

In addition, when the lithium secondary battery according to the present invention is a pouch-type lithium secondary battery, there are a plurality of electrode tabs. Accordingly, the lithium secondary battery has low resistance and excellent output characteristics compared to a cylindrical-type battery, and thus is suitable for use as a power source of the power tool.

## BRIEF DESCRIPTION OF THE DRAWINGS

The drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a graph showing voltage changes of batteries over time when a continuous discharge test is performed on the lithium secondary batteries prepared in Examples 1 to 2 and Comparative Examples 1 to 5, respectively.
FIG. 2 is an enlarged view of a graph according to the application of a first discharge pulse from the graph of FIG. 1.

## MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. Also, unless defined clearly and apparently in the description, the terms as defined in a commonly used dictionary are not ideally or excessively construed as having formal meaning.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In the present specification, when a part is referred to "include" an element, the part does not exclude other elements but may further include other elements unless otherwise indicated.

In the present specification, "A and/or B" means A, or B, or A and B.

In the present specification, the expression "%" denotes wt% unless explicitly stated otherwise.

The expression "$D_{50}$" in the present specification means a particle diameter at a cumulative volume of 50% in a particle diameter distribution curve of particles. The $D_{50}$, for example, may be measured by using a laser diffraction method. The laser diffraction method is capable of measuring a particle diameter from a submicron range to a range of several millimeters, thereby obtaining results of high reproducibility and high resolution.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II from Bell Japan Inc.

Hereinafter, the present invention will be described in more detail.

## Lithium Secondary Battery

A lithium secondary battery according to the present invention includes a battery case, and an electrode assembly and an electrolyte accommodated in the battery case, the electrode assembly includes a positive electrode, the positive electrode includes a positive electrode active material and a conductive agent, the conductive agent includes a point-type conductive agent and a linear conductive agent at a weight ratio of 4:1 to 14:1, and the electrolyte includes, as additives, a sultone-based compound and a phosphate-based compound at a weight ratio of 1:0.1 to less than 1:2.

In general, when the lithium secondary battery is discharged at a high rate, the voltage of the battery is significantly reduced. When the battery is used as a power source of a power tool, the power tool system determines the battery capacity is insufficient even though the battery capacity remains, the power of the power tool may be turned off.

As a result of a significant amount of repeated conducted researches for solving such a limitation, the present inventors have found that when the point-type conductive agent and the linear conductive agent are used as positive electrode conductive agents at a weight ratio of 4:1 to 14:1, and the sultone-based compound and the phosphate-based compound are used as electrolyte additives at a weight ratio of 1:0.1 to less than 1:2, the degree of voltage drop is not large even when the battery is discharged at a high rate, and thus when the battery is used as a power source for the power tool, the power-off phenomenon of the power tool may be prevented, thereby completing the present invention.

Hereinafter, each component of the lithium secondary battery according to the present invention will be described in more detail.

### <Electrode Assembly>

The electrode assembly according to the present invention may include a positive electrode, a negative electrode, and a separator disposed between the positive electrode and the negative electrode.

Hereinafter, each component of the electrode assembly will be described in more detail.

### (1) Positive Electrode

The positive electrode may include a positive electrode current collector, and a positive electrode active material layer disposed on the positive electrode current collector.

The positive electrode current collector is not particularly limited so long as it has conductivity without causing adverse chemical changes in the battery. For example, stainless steel, aluminum, nickel, titanium, sintered carbon, aluminum or stainless steel that is surface-treated with one of carbon, nickel, titanium, silver, or the like may be used as the current collector.

The positive electrode current collector may have a thickness of 8 $\mu$m to 500 $\mu$m, specifically 8 $\mu$m to 300 $\mu$m, and more specifically 10 $\mu$m to 50 $\mu$m. To improve output characteristics of the battery, when the loading amount of the positive electrode active material layer is reduced in order to reduce the resistance of the positive electrode, the positive electrode active material is embedded in the positive electrode current collector, and thus the positive electrode current collector may be disconnected. However, when the thickness of the positive electrode current collector according to the present invention satisfies the above numerical range, the thickness of the positive electrode current collector is thicker than that of the conventional positive electrode current collector, and thus the disconnection of the current collector may be prevented.

The positive electrode active material layer may include a positive electrode active material, and may further include a conductive agent, a binder, and the like as necessary.

The positive electrode active material is a compound capable of reversibly intercalating and deintercalating lithium, wherein the positive electrode active material may include a lithium composite metal oxide including lithium and at least one metal such as cobalt, manganese, nickel, or aluminum.

Specifically, the positive electrode active material may include a lithium-nickel-based oxide. In this case, the lithium nickel-based oxide may contain at least 80 mol%, specifically 80 mol% to 95 mol%, and more specifically 80 mol% to 90 mol% of nickel with respect to the total number of moles of transition metals excluding lithium. When the content of nickel satisfies the above numerical range, the positive electrode energy density is increased to ensure sufficient battery capacity, and thus the battery of the present invention is suitable for use as a battery for a power tool requiring a large capacity.

The lithium-nickel-based oxide may be a compound represented by Formula 1 below:

$$[\text{Formula 1}] \qquad Li_{1+x}[Ni_aCo_bM1_cM2_d]_{1-x}O_{2-y}X_y$$

In Formula 1 above, $0.8 \leq a \leq 0.95$, $0 \leq b \leq 0.2$, $0 \leq c \leq 0.2$, $0 \leq d \leq 0.1$, $a+b+c+d=1$, $0 \leq x \leq 0.3$, and $0 \leq y \leq 0.2$ may be met.

In Formula 1, M1 may be Mn, Al, or a combination thereof.

In Formula 1 above, M2 may be at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo.

In Formula 1 above, X may be at least one element selected from the group consisting of F, Cl, Br, I, At, P, and S.

The positive electrode active material may be included in an amount of 60 wt% to 99 wt%, preferably 70 wt% to 99 wt%, and more preferably 80 wt% to 98 wt% with respect to the total weight of the positive electrode active material layer. When the content of the positive electrode material satisfies the above range, the battery capacity may be improved by securing a sufficient positive electrode energy density.

The positive electrode conductive agent is a component for further improving conductivity of the positive electrode active material, and has conductivity without causing adverse chemical changes in the battery.

The positive electrode conductive agent according to the present invention includes both a point-type conductive agent and a linear conductive agent. Specifically, the conductive agent may include the point-type conductive agent and the linear conductive agent at a weight ratio of 4:1 to 14:1, preferably 5:1 to 10:1, and more preferably 5:1 to 7:1. When the ratio of the point-type conductive agent and the linear conductive agent satisfies the above numerical range, the side reaction increases as the specific surface area of the conductive agent increases, thereby preventing the excessive gas generation in the hot box test, and also, it is possible to reduce the positive electrode resistance by sufficiently securing the conductive network in the positive electrode.

The point-type conductive agent may include at least one among carbon black and acetylene black, but is not limited thereto. Preferably, carbon black may be used as the point-type conductive agent, and in this case, the conductivity is increased compared to the case of using other point-type conductive agents.

The linear conductive agent may include at least one among multi-walled carbon nanotubes and single-walled carbon nanotubes, but is not limited thereto. Preferably, the multi-walled carbon nanotubes may be used as the linear conductive agent, and in this case, the conductivity is increased compared to the case of using other linear conductive agents.

The positive electrode conductive agent may be included in an amount of 1 wt% to 20 wt%, preferably 1 wt% to 15 wt%, and more preferably 1 wt% to 10 wt% with respect to the total weight of the positive electrode active material layer. When the content of the positive electrode conductive agent in the positive electrode active material layer satisfies the above range, the electrical conductivity of the positive electrode may be improved by securing the positive electrode conductive network.

The positive electrode binder is a component that assists in the binding between the active material and the conductive agent and in the binding with the current collector.

Examples of the positive electrode binder may include polyvinylidene fluoride, polyvinyl alcohol, carboxymethylcellulose (CMC), starch, hydroxypropylcellulose, regenerated cellulose, polyvinylpyrrolidone, polyethylene (PE), polypropylene, ethylene-propylene-diene monomer, sulfonated ethylene-propylene-diene monomer, styrene-butadiene rubber, fluorine rubber, various copolymers, and the like, and any one alone thereof or a mixture of two or more thereof may be used.

The positive electrode binder may be included in an amount of 0.5 wt% to 5.0 wt%, specifically 1.0 wt% to 4.0 wt%, more specifically 1.0 wt% to 3.5 wt% with respect to the total weight of the positive electrode active material layer. When the content of the positive electrode binder satisfies the above range, a contact area between the positive electrode binder and the positive electrode active material is increased, thereby securing excellent positive electrode adhesion.

Meanwhile, the loading amount of the positive electrode active material layer may be less than 11.0 mg/cm$^2$, specifically 8.0 mg/cm$^2$ to 10.0 mg/cm$^2$, and more specifically 8.0 mg/cm$^2$ to 9.4 mg/cm$^2$. When the loading amount of the positive electrode active material layer is at least 11.0 mg/cm$^2$, there is a limitation in that the resistance of the battery increases as the resistance value of the positive electrode increases, resulting in the deterioration of output characteristics.

The porosity of the positive electrode active material layer may be greater than 30%, specifically, 32% to 38%, and more specifically, 32% to 37%. When the porosity of the positive electrode active material layer satisfies the above range, the interface resistance of the positive electrode is lowered, so that the output characteristics of the battery may be improved.

The filling density of the positive electrode active material layer may be at least 2.8 g/cc, specifically 2.8 g/cc to 3.5 g/cc, and more specifically 2.9 g/cc to 3.2 g/cc, and accordingly, the porosity of the positive electrode active material layer may have the above-described appropriate numerical range.

Meanwhile, the positive electrode may be prepared according to a typical method of preparing a positive electrode except that the above-described positive electrode active material is used. Specifically, the positive electrode may be prepared by preparing a positive electrode slurry composition including the above-mentioned positive electrode active material, the positive electrode conductive agent, and/or the positive electrode binder, applying the positive electrode slurry composition on a positive electrode current collector, and drying and rolling the positive electrode slurry composition.

Also, as another method, the positive electrode may be prepared by casting the positive electrode slurry composition on a separate support and then laminating a film separated from the support on the positive electrode collector.

### (2) Negative Electrode

The negative electrode may include a negative electrode current collector, and a negative electrode active material layer disposed on the negative electrode current collector. Alternatively, the negative electrode may be a graphite electrode made of carbon (C). Alternatively, the negative electrode may be a metal itself.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used.

The negative electrode current collector may typically have a thickness of 8 $\mu$m to 500 $\mu$m, and, similar to the positive electrode current collector, microscopic irregularities may be formed on the surface of the negative electrode current collector to improve the binding force of the negative electrode active material. The negative electrode current collector, for example, may be used in various shapes such as a film, a sheet, a foil, a net, a porous body, a foam body, and a non-woven fabric body.

The negative electrode active material layer may include a negative electrode active material, and may further include a conductive agent, a binder, and the like as necessary.

The negative electrode active material is a material capable of reversibly intercalating/deintercalating lithium metals and lithium ions.

The negative electrode active material may include at least one selected from the group consisting carbon-based material, metal or an alloy of lithium and the metal, a metal composite oxide, a material which may be doped and undoped with lithium, and a transition metal oxide.

The carbon-based active material may be crystalline carbon, amorphous carbon, or a combination thereof. Examples of the crystalline carbon may include graphite such as irregular, planar, flaky, spherical, or fibrous natural graphite or artificial graphite, and examples of the amorphous carbon may include soft carbon (low-temperature sintered carbon) or hard carbon, mesophase pitch carbide, sintered cokes, or the like.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

One selected from the group consisting of PbO, PbO$_2$, Pb$_2$O$_3$, Pb$_3$O$_4$, Sb$_2$O$_3$, Sb$_2$O$_4$, Sb$_2$O$_5$, GeO, GeO$_2$, Bi$_2$O$_3$, Bi$_2$O$_4$, Bi$_2$O$_5$, Li$_x$Fe$_2$O$_3$(0$\leq$x$\leq$1), Li$_x$WO$_2$(0$\leq$x$\leq$1), and Sn$_x$Me$_{1-x}$Me'$_y$O$_z$ (Me: Mn, Fe, Pb, Ge; Me': Al, B, P, Si, Groups I, II and III elements of the periodic table, or halogen; 0<x$\leq$1; 1$\leq$y$\leq$3; 1$\leq$z$\leq$8) may be used as the metal composite oxide.

The material, which may be doped and undoped with lithium, may include Si, SiO$_x$(0<x$\leq$2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO$_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO$_2$ and at least

one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

Specifically, the negative electrode active material according to the present invention may be artificial graphite, and more specifically, may be artificial graphite surface-coated with hard carbon. When the artificial graphite is used as the negative electrode active material, the cycle life characteristics of the battery are improved by lowering the resistance of the negative electrode to improve the capacity characteristics of the battery, and by lowering the overvoltage during the charging so as to prevent lithium precipitation due to side reactions.

The negative electrode active material may be included in an amount of 60 wt% to 99 wt%, preferably 70 wt% to 99 wt%, and more preferably 80 wt% to 99 wt% with respect to the total weight of the negative electrode active material layer. When the content of the negative electrode active material satisfies the above range, the content of the negative electrode conductive agent and the negative electrode binder may be maintained at a desired level, and a sufficient negative electrode energy density may be secured, thereby improving the battery capacity.

The negative electrode conductive agent is a component for further improving the conductivity of the negative electrode active material, and the conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode conductive agent may be included in an amount of 1 wt% to 20 wt%, preferably 1 wt% to 15 wt%, and more preferably 1 wt% to 10 wt% with respect to the total weight of the negative electrode active material layer. When the content of the negative electrode active material satisfies the above range, the electrical conductivity of the negative electrode may be improved by securing the negative electrode conductive network.

The negative electrode binder is a component that assists in the binding among the negative electrode conductive agent, the negative electrode active material, and the negative electrode current collector. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, polyethylene, polypropylene, ethylene-propylene-diene monomer, sulfonated ethylene-propylene-diene monomer, styrene-butadiene rubber, fluorine rubber, various copolymers thereof, and the like, and any one alone thereof or a mixture of two or more thereof may be used.

The negative electrode binder may be included in an amount of 1 wt% to 20 wt%, preferably 1 wt% to 15 wt%, and more preferably 1 wt% to 10 wt% with respect to the total weight of the negative electrode active material layer. When the content of the negative electrode binder satisfies the above range, the negative electrode active material particles may be smoothly bound to minimize the volume expansion problem of the negative electrode active material, and the negative electrode active material may be well attached to the negative electrode current collector.

Meanwhile, when the metal itself is used without forming the negative electrode active material layer on the negative electrode, the negative electrode may be prepared by a method of physically bonding, rolling, or depositing a metal on the metal thin film itself or the negative electrode current collector. The depositing method may use an electrical deposition method or chemical vapor deposition method of metal.

For example, the metal bonded/rolled/deposited on the metal thin film itself or the negative electrode current collector may include one metal selected from the group consisting of lithium (Li), nickel (Ni), tin (Sn), copper (Cu), and indium (In) or an alloy of two metals thereof.


**(3) Separator**

The separator may be used without particular limitation as long as it is generally used as a separator in a lithium secondary battery, and particularly, it is preferable that the separator has high moisture-retention ability for an electrolyte solution as well as low resistance to the transfer of electrolyte ions.

As the separator, for example, a porous polymer including a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. Also, a typical porous non-woven fabric, for example, a non-woven fabric formed of high melting point glass fibers or polyethylene terephthalate fibers may be used as the separator.

The separator may have a thickness of 5 $\mu$m to 20 $\mu$m, preferably 5 $\mu$m to 15 $\mu$m, and more preferably 6 $\mu$m to 13 $\mu$m. When the thickness of the separator satisfies the above range, it is possible to minimize the cell resistance value while preventing a short circuit between the positive electrode and the negative electrode. As a result, it is possible to improve the life characteristics and output characteristics of the lithium secondary battery.

**<Electrolyte>**

Meanwhile, the lithium secondary battery according to the present invention may include an electrolyte.

The electrolyte may include an organic solvent and a lithium salt that are commonly used in the art, and is not particularly limited.

Any organic solvent may be used as the organic solvent without particular limitation so long as it may function as a medium through which ions involved in an electrochemical reaction of the battery may move. Specifically, as the organic solvent, an ester-based solvent such as methyl propionate, ethyl propionate, methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC) may be used alone or in combination.

Preferably, in the electrolyte, a mixed solution of a carbonate-based solvent and an ester-based solvent may be used as an organic solvent, and specifically, a mixed solution of a cyclic carbonate-based solvent and an ester-based solvent, or of a cyclic carbonate-based solvent, a linear carbonate-based solvent, and an ester-based solvent may be used.

The cyclic carbonate-based solvent may be at least one among ethylene carbonate and propylene carbonate. The linear carbonate-based solvent may be at least one selected from the group consisting of dimethyl carbonate, diethyl carbonate, and ethylmethyl carbonate.

The ester-based solvent may be ethyl propionate (EP). Since the ethyl propionate has a lower viscosity than a conventional electrolyte component, when it is included, an effect of increasing the ion conductivity of the electrolyte may be obtained.

The ethyl propionate may be included in an amount of 80 wt% or less, specifically 5 wt% to 80 wt%, and more specifically 40 wt% to 70 wt% with respect to the total weight of the electrolyte. When the content of the ethyl propionate satisfies the above numerical range, the viscosity of the electrolyte may be optimized to achieve excellent ion conductivity of the electrolyte.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. The lithium salt is preferably included in the electrolyte at a concentration of about 0.6 mol% to about 2 mol%.

The electrolyte according to the present invention may include, as additives, the sultone-based compound and the phosphate-based compound in order to further improve the physical properties of the secondary battery. In this case, the electrolyte may include, as additives, the sultone-based compound and the phosphate-based compound at a weight ratio of 1:0.1 to less than 1:2, specifically 1:0.3 to 1:1.9, and more specifically 1:0.5 to 1:1.8. When the weight ratio of the sultone-based compound and the phosphate-based compound included as the electrolyte additives is 1:2 or more, the film is not stably formed on the electrode, and thus the voltage drop increases during the high-rate discharge, and the output characteristics of the battery are deteriorated. In addition, when the battery is driven at a high temperature, the oxidation reaction of the electrolyte is not sufficiently prevented, and the amount of heat released is not controlled to an appropriate level, and thus the high-temperature cycle performance may be deteriorated.

The sultone-based compound may be included in an amount of less than 1 wt%, specifically 0.3 wt% to 0.9 wt%, and more specifically 0.5 wt% to 0.8 wt% with respect to the total weight of the electrolyte. When the content of the sultone-based compound in the electrolyte satisfies the above numerical range, the output characteristics of the battery may be improved and the initial resistance of the lithium secondary battery may be reduced, thereby reducing the degree of voltage drop during the high-rate discharge.

The phosphate-based compound may be included in an amount of less than 1 wt%, specifically 0.6 wt% to 0.9 wt%, and more specifically 0.7 wt% to 0.8 wt% with respect to the total weight of the electrolyte. When the content of the phosphate-based compound in the electrolyte satisfies the above numerical range, it is possible to improve the high-temperature cycle performance of the battery while lowering the initial resistance of the lithium secondary battery, thereby reducing the degree of voltage drop during the high-rate discharge.

The sultone-based compound may be, for example, at least one compound selected from the group consisting of 1,3-propane sultone and 1,3-propene sultone, but is not limited thereto.

The phosphate-based compound may be, for example, at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, but is not limited thereto.

Meanwhile, the electrolyte may further include, as additives, a cyclic carbonate-based compound, a halogen-substituted carbonate-based compound, a nitrile-based compound, a sulfate-based compound, a borate-based compound, a benzene-based compound, an amine-based compound, a silane-based compound, and/or a lithium salt-based compound, in addition to the sultone-based compound and the phosphate-based compound as described above.

The cyclic carbonate-based compound may be, for example, vinylene carbonate (VC) or vinylethylene carbonate (VEC).

The halogen-substituted carbonate-based compound may be, for example, fluoroethylene carbonate (FEC) or the like.

The nitrile-based compound may be, for example, succinonitrile, adiponitrile, hexantricyanide, 1,4-dicyano-2-butene, or the like.

The sulfate-based compound may be, for example, ethylene sulfate (Esa), trimethylene sulfate (TMS), methyl trimethylene sulfate (MTMS), or the like.

The borate-based compound may be, for example, tetraphenylborate, lithium oxalyl difluoroborate (LiODFB), or the like.

The benzene-based compound, for example, may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte solution, wherein the lithium salt-based compound may include at least one compound selected from the group consisting of $LiPO_2F_2$, LiODFB, LiBOB (lithium bis(oxalato)borate ($LiB(C_2O_4)_2$), and $LiBF_4$.

The total amount of the additive may be 1 wt% to 20 wt%, specifically 1 wt% to 15 wt%, and more specifically 2 wt% to 10 wt% with respect to the total weight of the electrolyte solution. When the additive is included within the above range, a film may be stably formed on the electrode and ignition phenomenon may be suppressed when the battery is overcharged, and side reactions may be prevented from occurring during the initial activation process of the secondary battery, or the additive may be prevented from remaining or being precipitated.

**<Battery Case>**

The lithium secondary battery according to the present invention may include a cylindrical-, prismatic-, pouch-, or coin-type battery case, and preferably may include a pouch-type battery case.

The pouch-type battery case includes a barrier layer, a base layer formed on one surface of the barrier layer, and a sealant layer formed on the other surface of the barrier layer, and includes at least one cup portion indented in one direction.

Specifically, the pouch-type battery case has flexibility, and may be manufactured by a method for forming a cup portion indented in one direction by inserting a pouch film stack in which a base layer, a barrier layer, and a sealant layer are sequentially stacked into a press forming apparatus, and stretching the pouch film stack by applying pressure to a partial region of the pouch film stack with a punch.

The base layer is disposed on the outermost layer of the pouch to protect and electrically insulate the electrode assembly from external impact.

The base layer may be made of a polymer material, for example, at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base layer may have a single-layered structure or a multi-layered structure in which different polymer films are stacked. When the base layer has a multi-layered structure, an adhesive layer may be interposed between the polymer films.

Meanwhile, the base layer may have a total thickness of 10 μm to 60 μm, preferably 20 μm to 50 μm, and more preferably 30 μm to 50 μm. When the base layer has a multi-layered structure, the thickness is a thickness including an adhesive layer. When the base layer satisfies the above range, the durability, insulation, and moldability are excellent. If the base layer is too thin, the durability may be deteriorated, damage to the base layer may occur during the forming process, if it is too thick, the moldability may be deteriorated, the overall thickness of the pouch may be increased, and the battery accommodation space may be reduced, thereby reducing energy density.

The barrier layer is for securing the mechanical strength of the pouch-type battery case, blocking the entry of gas, moisture, or the like outside the secondary battery, and preventing the leakage of the electrolyte.

The barrier layer may have a thickness of 40 μm to 100 μm, more preferably 50 μm to 80 μm, and more preferably 60 μm to 80 μm. When the thickness of the barrier layer satisfies the above range, the moldability is improved to increase the molding depth of the cup portion, or the crack and/or pinhole generation is less even when the two cups are molded, thereby improving resistance to external stress after molding.

Meanwhile, the barrier layer may be made of a metal material, and specifically, may be made of an aluminum alloy thin film.

The aluminum alloy thin film may include aluminum and a metal element, in addition to the aluminum, for example, one or two or more selected from the group consisting of iron (Fe), copper (Cu), chromium (Cr), manganese (Mn), nickel (Ni), magnesium (Mg), silicon (Si), and zinc (Zn).

The sealant layer is attached through thermal compression to seal the pouch, and is located on the innermost layer of the pouch film stack.

Since the sealant layer is a surface which is brought into contact with the electrolyte and the electrode assembly after the pouch is molded, the sealant layer should have insulation and corrosion resistance, and since the inside thereof should be completely sealed to block material movement between the inside and the outside, the sealant layer should have high sealing properties.

The sealant layer may be made of a polymer material, for example, at least one selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon, and among these, it is particularly preferable that the sealant layer includes polypropylene (PP) having excellent mechanical properties such as tensile strength, rigidity, surface hardness, abrasion resistance, and heat resistance, and excellent chemical properties such as corrosion resistance.

The sealant layer may have a single-layered structure, or may have a multi-layered structure including two or more layers made of different polymer materials.

The sealant layer may have a total thickness of 60 μm to 100 μm, preferably 60 μm to 90 μm, and more preferably 70 μm to 90 μm. If the sealant layer is too thin, sealing durability and insulation may be deteriorated, and if it is too thick, flexuosity may be deteriorated and the total thickness of the pouch film stack may increase, resulting in a decrease in energy density relative to volume.

Meanwhile, the pouch film stack above may be prepared through a method for preparing a pouch film stack known in the art. For example, the pouch film stack may be prepared through a method for attaching a base layer to the upper surface of a barrier layer through an adhesive and forming a sealant layer on the lower surface of the barrier layer through coextrusion or an adhesive, but is not limited thereto.

The pouch-type battery case may be sealed in a state in which the electrode assembly is accommodated such that a part of the electrode lead, that is, a terminal portion is exposed. Specifically, when the electrode lead is connected to an electrode tab of the electrode assembly and an insulating portion is formed on a portion of the electrode lead, the electrode assembly is accommodated in the accommodation space provided in the cup portion, the electrolyte is injected, and then the pouch-type battery case may be sealed.

The electrode lead may have a thickness of 0.05 mm to 0.5 mm, specifically 0.08 mm to 0.3 mm, and more specifically 0.1 mm to 0.2 mm. When the thickness of the electrode lead satisfies the above numerical range that is thicker than the existing one, there is an effect that the resistance of the battery is reduced while the heat generation is reduced when the external short circuit occurs, thereby improving heat resistance.

When the lithium secondary battery according to the present invention is a pouch-type lithium secondary battery, the lithium secondary battery is lighter than a cylindrical-type secondary battery, and the resistance becomes smaller because a plurality of tabs are present, and thus the lithium secondary battery has excellent output characteristics, thereby being suitable for use as a battery for a power tool.

Meanwhile, in the lithium secondary battery according to the present invention, the voltage holding ratio $V_d$, during the 24C discharge, represented by Equation 1 below may be at least 81%, specifically 81% to 87%, and more specifically 81% to 85%.

$$[Equation\ 1]$$

$$V_d\ (\%)\ =\ (V_f\ /\ V_i)\ \times\ 100$$

In Equation 1 above, $V_f$ is a voltage of the lithium secondary battery after a discharge pulse is applied at a 24C rate, and $V_i$ is a voltage of the lithium secondary battery fully-charged before a discharge pulse is applied at a 24C rate. When the voltage holding ratio $V_d$ satisfies the above numerical range, the degree of voltage drop is not large even when the battery is discharged at a high rate, and thus the battery of the present invention may be suitable for use as a power source of the power tool.

The lithium secondary battery according to the present invention may be used in a battery cell which is used as a power source for small devices such as a power tool, and may also be used as a unit cell in a medium and large sized battery module including a plurality of battery cells. Preferred examples of the medium and large sized devices include electric vehicles, hybrid electric vehicles, plug-in hybrid electric vehicles, Energy Storage Systems (ESSs), and the like.

Hereinafter, the present invention will be described in more detail with reference to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

**Examples and Comparative Examples**

**Example 1 (Lithium Secondary Battery Preparation)**

Artificial graphite (average particle diameter $D_{50}$ = 18.8 $\mu$m, BET specific surface area = 1.0 m$^2$/g) coated with hard carbon, carbon black, carboxymethyl cellulose (CMC), and a styrene-butadiene rubber (SBR) were mixed at a weight ratio of 94.3:2.0:1.2:2.5, and distilled water was added thereto to prepare a negative electrode slurry. The solid content of the negative electrode slurry was 44 wt%.

The negative electrode slurry was applied to one surface of a copper (Cu) metal thin film having a thickness of 10 $\mu$m at a loading amount of 6.96 mAh/cm$^2$ and then dried in vacuum. Then, the dried negative electrode slurry was roll-pressed, dried in a vacuum oven at 130 °C for 12 hours, and then punched to prepare a negative electrode.

A positive electrode slurry was prepared by introducing Li[Ni$_{0.8}$Co$_{0.1}$Mn$_{0.1}$]O$_2$ having an average diameter $D_{50}$ of 10 $\mu$m, a positive electrode conductive agent obtained by mixing carbon black and multi-walled carbon nanotubes (MWCNTs) at a weight ratio of 6:1, and a hydrogenated nitrile butadiene rubber (H-NBR) at a weight ratio of 94.8:3.5:1.3:0.4 into an N-methylpyrrolidone (NMP) solvent, followed by stirring. The solid content of the positive electrode slurry was 70 wt%.

The positive electrode slurry was applied to one surface of an aluminum thin film having a thickness of 15 $\mu$m at a loading amount of 9.24 mg/cm$^2$, and then dried in vacuum at 130 °C for 10 hours. The dried positive electrode slurry was roll-pressed, dried in a vacuum oven at 130 °C for 12 hours, and then punched to prepare a positive electrode.

The negative electrode and the positive electrode prepared as described above and a porous polyethylene separator having a thickness of 10 $\mu$m were assembled in a stacking manner to prepare an electrode assembly.

An electrolyte was prepared by dissolving LiPF$_6$ and LiFSi in a solvent in which ethylene carbonate (EC), ethyl propionate (EP), and ethylmethyl carbonate (EMC) were mixed at a weight ratio of 20:40:40 such that LiPF6 became 0.7 M and LiFSi became 0.7 M, mixing, as additives, 0.5 wt% of 1,3-propanesultone (PS) with respect to the total weight of the electrolyte and 0.8 wt% of lithium difluorophosphate (LiDFP) with respect to the total weight of the electrolyte, and stirring the mixture.

A lithium secondary battery was prepared by accommodating the electrode assembly in a pouch-type battery case, injecting the electrolyte thereto, and sealing the case.

**Example 2 (Lithium Secondary Battery Preparation)**

An electrolyte was prepared in the same manner as in Example 1, except that 1.0 wt% of 1,3-propanesultone with respect to the total weight of the electrolyte and 0.5 wt% of lithium difluorophosphate with respect to the total weight of the electrolyte were used as additives.

A lithium secondary battery was prepared in the same manner as in Example 1, except that the above electrolyte was used.

**Comparative Example 1 (Lithium Secondary Battery Preparation)**

A positive electrode was prepared in the same manner as in Example 1, except that the positive electrode active material, a conductive agent obtained by mixing carbon black and multi-walled carbon nanotubes (MWCNTs) at a weight ratio of 15:1, polyvinylidene fluoride (PVdF), and a hydrogenated nitrile butadiene rubber (H-NBR) were mixed at a weight ratio of 95.16:3.2:1.3:0.34, and the loading amount of the positive electrode was 9.24 mg/cm$^2$.

An electrolyte was prepared in the same manner as in Example 1, except that 1.0 wt% of 1,3-propanesultone with respect to the total weight of the electrolyte and 0.5 wt% of lithium difluorophosphate with respect to the total weight of the electrolyte were used as additives.

A lithium secondary battery was prepared in the same manner as in Example 1, except that the above positive electrode and the above electrolyte were used.

**Comparative Example 2 (Lithium Secondary Battery Preparation)**

A positive electrode was prepared in the same manner as in Example 1, except that the positive electrode active material, a conductive agent obtained by mixing carbon black and multi-walled carbon nanotubes (MWCNTs) at a weight ratio of 15:1, polyvinylidene fluoride (PVdF), and a hydrogenated nitrile butadiene rubber (H-NBR) were mixed at a weight ratio of 95.16:3.2:1.3:0.34, and the loading amount of the positive electrode was 9.24 mg/cm$^2$.

A lithium secondary battery was prepared in the same manner as in Example 1, except that the above positive electrode was used.

## Comparative Example 3 (Lithium Secondary Battery Preparation)

A positive electrode was prepared in the same manner as in Example 1, except that the positive electrode active material, a conductive agent obtained by mixing carbon black and multi-walled carbon nanotubes (MWCNTs) at a weight ratio of 30:1, polyvinylidene fluoride (PVdF), and a hydrogenated nitrile butadiene rubber (H-NBR) were mixed at a weight ratio of 95.28:3.1:1.3:0.32, and the loading amount of the positive electrode was 9.28 mg/cm$^2$.

A lithium secondary battery was prepared in the same manner as in Example 1, except that the above positive electrode was used.

## Comparative Example 4 (Lithium Secondary Battery Preparation)

A positive electrode was prepared in the same manner as in Example 1, except that the positive electrode active material, a conductive agent obtained by mixing carbon black and multi-walled carbon nanotubes (MWCNTs) at a weight ratio of 3:1, polyvinylidene fluoride (PVdF), and a hydrogenated nitrile butadiene rubber (H-NBR) were mixed at a weight ratio of 94.3:4.0:1.3:0.4, and the loading amount of the positive electrode was 9.64 mg/cm$^2$.

A lithium secondary battery was prepared in the same manner as in Example 1, except that the above positive electrode was used.

## Comparative Example 5 (Lithium Secondary Battery Preparation)

A positive electrode was prepared in the same manner as in Example 1, except that the positive electrode active material, multi-walled carbon nanotubes (MWCNTs), polyvinylidene fluoride (PVdF), and a hydrogenated nitrile butadiene rubber (H-NBR) were mixed and used at a weight ratio of 95.4:3.0:1.3:0.3, and the loading amount of the positive electrode was 9.58 mg/cm$^2$.

An electrolyte was prepared in the same manner as in Example 1, except that 1.0 wt% of 1,3-propanesultone with respect to the total weight of the electrolyte and 0.5 wt% of lithium difluorophosphate with respect to the total weight of the electrolyte were used as additives.

A lithium secondary battery was prepared in the same manner as in Example 1, except that the above positive electrode and the above electrolyte were used.

## Comparative Example 6 (Lithium Secondary Battery Preparation)

An electrolyte was prepared in the same manner as in Example 1, except that 0.5 wt% of 1,3-propanesultone with respect to the total weight of the electrolyte and 1.0 wt% of lithium difluorophosphate with respect to the total weight of the electrolyte were used as additives.

A lithium secondary battery was prepared in the same manner as in Example 1, except that the above electrolyte was used.

## Comparative Example 7 (Lithium Secondary Battery Preparation)

An electrolyte was prepared in the same manner as in Example 1, except that 1 wt% of 1,3-propanesultone with respect to the total weight of the electrolyte was used as an additive, and lithium difluorophosphate was not used.

A lithium secondary battery was prepared in the same manner as in Example 1, except that the above electrolyte was used.

In Examples 1 to 2 and Comparative Examples 1 to 7, the compositions of the positive electrode conductive agent and the electrolyte are as shown in Table 1 below.

[Table 1]

| | Positive electrode conductive agent | Electrolyte | |
| --- | --- | --- | --- |
| | | Composition | Weight ratio (PS:LiDFP) |
| Example 1 | Carbon black 3.0 wt% | PS 0.5 wt% | 1:1.6 |
| | MWCNT 0.5 wt% | LiDFP 0.8 wt% | |

(continued)

| | Positive electrode conductive agent | Electrolyte | |
| --- | --- | --- | --- |
| | | Composition | Weight ratio (PS:LiDFP) |
| Example 2 | Carbon black 3.0 wt% | PS 1.0 wt% | 1:0.5 |
| | MWCNT 0.5 wt% | LiDFP 0.5 wt% | |
| Comparative Example 1 | Carbon black 3.0 wt% | PS 1.0 wt% | 1:0.5 |
| | MWCNT 0.2 wt% | LiDFP 0.5 wt% | |
| Comparative Example 2 | Carbon black 3.0 wt% | PS 0.5 wt% | 1:1.6 |
| | MWCNT 0.2 wt% | LiDFP 0.8 wt% | |
| Comparative Example 3 | Carbon black 3.0 wt% | PS 0.5 wt% | 1:1.6 |
| | MWCNT 0.1 wt% | LiDFP 0.8 wt% | |
| Comparative Example 4 | Carbon black 3.0 wt% | PS 0.5 wt% | 1:1.6 |
| | MWCNT 1.0 wt% | LiDFP 0.8 wt% | |
| Comparative Example 5 | MWCNT 3.0 wt% | PS 1.0 wt% | 1:0.5 |
| | | LiDFP 0.5 wt% | |
| Comparative Example 6 | Carbon black 3.0 wt% | PS 0.5 wt% | 1:2 |
| | MWCNT 0.5 wt% | LiDFP 1.0 wt% | |
| Comparative Example 7 | Carbon black 3.0 wt% | PS 1.0 wt% | 1:0 |
| | MWCNT 0.5 wt% | | |

### Experimental Example 1 - Evaluation of Continuous Discharge Test

The lithium secondary battery of each of Examples and Comparative Examples were fully charged to 4.2 V under the initial 0.6C condition at 23 °C. Then, by using PNE Cycle program (CTSMonPro, PNE SOLUTION CO. LTD), a continuous discharge test of the lithium secondary battery was performed by applying a discharge pulse under the conditions shown in Table 2 below and having a rest period between each pulse application.

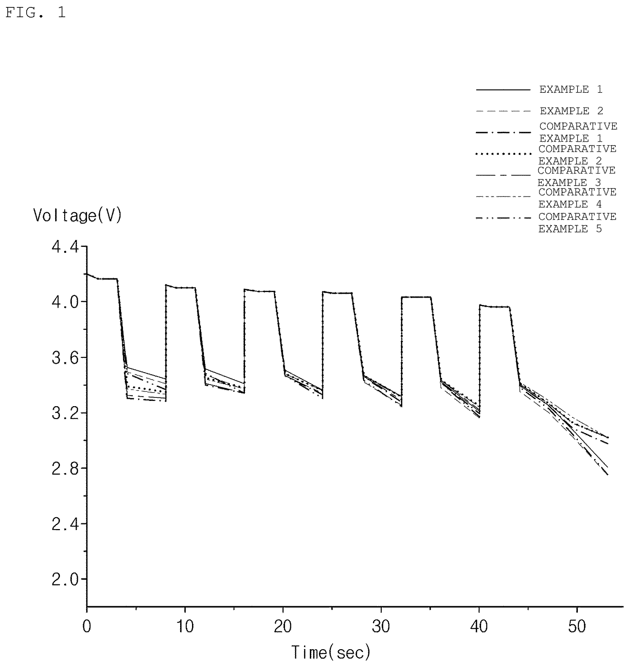

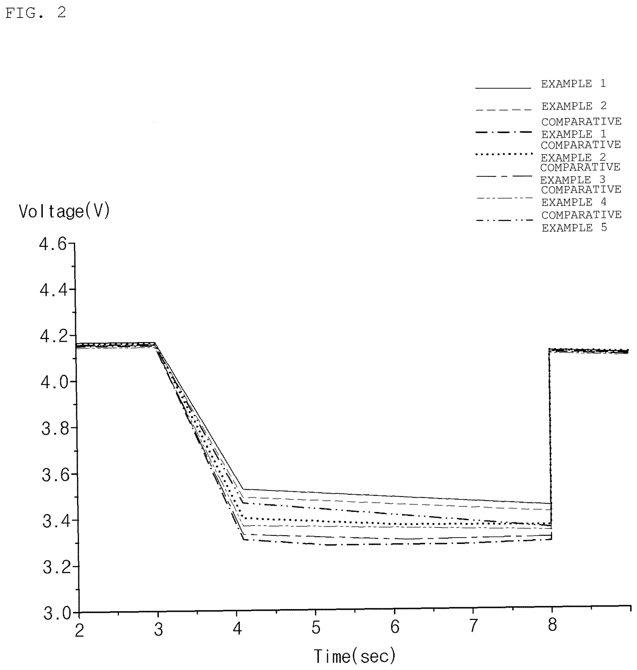

In this case, graphs showing voltage changes of the lithium secondary batteries over time in the continuous discharge test are shown in FIGS. 1 and 2. Specifically, FIG. 1 is a graph showing voltage changes of batteries over time when the above-described continuous discharge test is performed on the lithium secondary batteries prepared in Examples 1 to 2 and Comparative Examples 1 to 5, respectively. FIG. 2 is an enlarged view of a graph according to the application of a first discharge pulse from the graph of FIG. 1. As shown in FIGS. 1 and 2, it may be confirmed that when a discharge pulse is applied to the lithium secondary battery, a voltage drop occurs, and the voltage is steadily decreased while the pulse is repeatedly applied. Furthermore, it may be confirmed that when the application of the discharge pulse is terminated, the voltage of the lithium secondary battery is recovered.

Meanwhile, the battery voltages before and after the first pulse was applied in the continuous discharge test were measured, and the results are shown in Table 3 below. In addition, a voltage holding ratio $V_d$, durting the 24C discharge, represented by Equation 1 below is calculated from the measured voltage value, and the results are shown in Table 3 below.

$$[Equation\ 1]$$

$$V_d\ (\%)\ =\ (V_f\ /\ V_i)\ \times\ 100$$

In Equation 1 above, $V_f$ is a voltage of the lithium secondary battery after a discharge pulse is applied at a 24C rate, and $V_i$ is a voltage of the lithium secondary battery fully-charged before a discharge pulse is applied at a 24C rate.

[Table 2]

| Discharge pulse | | | Rate (C) |
|---|---|---|---|
| Application number of times (time) | Current (A) | Time (s) | |
| 1 | 120 | 5 | 24 |
| 2 | 140 | 5 | 28 |
| 3 | 160 | 5 | 32 |
| 4 | 180 | 5 | 36 |
| 5 | 200 | 5 | 40 |
| 6 | 200 | 10 | 40 |

[Table 3]

| | Voltage $V_i$ before pulse application at 24C rate (V) | Voltage $V_f$ after pulse application at 24C rate (V) | $V_d$ (%) |
|---|---|---|---|
| Example 1 | 4.19 | 3.44 | 82.1 |
| Example 2 | 4.19 | 3.41 | 81.3 |
| Comparative Example 1 | 4.19 | 3.29 | 78.5 |
| Comparative Example 2 | 4.19 | 3.36 | 80.1 |
| Comparative Example 3 | 4.19 | 3.30 | 78.7 |
| Comparative Example 4 | 4.18 | 3.34 | 79.9 |
| Comparative Example 5 | 4.18 | 3.34 | 79.9 |
| Comparative Example 6 | 4.19 | 3.34 | 79.7 |
| Comparative Example 7 | 4.19 | 3.26 | 77.8 |

As shown in Table 3, it may be confirmed that the voltage holding ratio $V_d$ of the lithium secondary battery during the 24C discharge in Examples 1 and 2 was at least 81%, which was higher than those of Comparative Examples 1 to 7. This means that the degrees of voltage drop of the batteries in Examples 1 and 2 are smaller than those in Comparative Examples 1 to 7. That is, in the case of Examples 1 and 2 including the point-type conductive agent and the linear conductive agent in a weight ratio of 4:1 to 14:1, and the sultone-based compound and the phosphate-based compound as additives at a weight ratio of 1:0.1 to less than 1:2, it may be confirmed that the degrees of voltage drop of the batteries during the high-rate discharge are smaller than those of Comparative Examples 1 to 7.

**Claims**

1.  A lithium secondary battery comprising:

     a battery case; and
     an electrode assembly and an electrolyte accommodated in the battery case,
     wherein the electrode assembly comprises a positive electrode,
     the positive electrode comprises a positive electrode active material and a conductive agent,
     the conductive agent comprises a point-type conductive agent and a linear conductive agent at a weight ratio of 4:1 to 14:1, and
     the electrolyte comprises, as additives, a sultone-based compound and a phosphate-based compound at a weight ratio of 1:0.1 to less than 1:2.

2.  The lithium secondary battery of claim 1, wherein the positive electrode active material comprises a lithium nickel-based oxide containing at least 80 mol% of nickel with respect to the total number of moles of transition metals excluding lithium.

3. The lithium secondary battery of claim 1, wherein the positive electrode active material comprises a lithium nickel-based oxide containing 85-90 mol% of nickel with respect to the total number of moles of transition metals excluding lithium.

4. The lithium secondary battery of claim 2, wherein the lithium nickel-based oxide is a compound represented by Formula 1 below:

[Formula 1]     $Li_{1+x}[Ni_aCo_bM1_cM2_d]_{1-x}O_{2-y}X_y$

wherein, in Formula 1 above, $0.8 \leq a \leq 0.95$, $0 \leq b \leq 0.2$, $0 \leq c \leq 0.2$, $0 \leq d \leq 0.1$, $a+b+c+d=1$, $0 \leq x \leq 0.3$, $0 \leq y \leq 0.2$, M1 is Mn, Al, or a combination thereof, M2 is at least one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X is at least one element selected from the group consisting of F, Cl, Br, I, At, P, and S.

5. The lithium secondary battery of claim 1, wherein the point-type conductive agent is carbon black, and the linear conductive agent is multi-walled carbon nanotubes.

6. The lithium secondary battery of claim 1, wherein the sultone-based compound is included in an amount of less than 1 wt% with respect to the total weight of the electrolyte.

7. The lithium secondary battery of claim 1, wherein the sultone-based compound is included in an amount of 0.3 wt% to 0.9 wt% with respect to the total weight of the electrolyte.

8. The lithium secondary battery of claim 1, wherein the phosphate-based compound is included in an amount of less than 1 wt% with respect to the total weight of the electrolyte.

9. The lithium secondary battery of claim 1, wherein the phosphate-based compound is included in an amount of 0.6 wt% to 0.9 wt% with respect to the total weight of the electrolyte.

10. The lithium secondary battery of claim 1, wherein the sultone-based compound is at least one compound selected from the group consisting of 1,3-propane sultone and 1,3-propene sultone.

11. The lithium secondary battery of claim 1, wherein the phosphate-based compound is at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite.

12. The lithium secondary battery of claim 1, wherein a voltage holding ratio $V_d$, during the 24C discharge, represented by Equation 1 below is at least 81%:

$$[Equation\ 1]$$

$$V_d\ (\%)\ =\ (V_f\ /\ V_i)\ \times\ 100$$

wherein, in Equation 1 above, $V_f$ is a voltage of the lithium secondary battery after a discharge pulse is applied at a 24C rate, and $V_i$ is a voltage of the lithium secondary battery fully-charged before a discharge pulse is applied at a 24C rate.

13. The lithium secondary battery of claim 12, wherein the voltage holding ratio $V_d$ during the 24C discharge is 81% to 87%.

14. The lithium secondary battery of claim 1, wherein the battery case is a pouch-type battery case.

FIG. 1

FIG. 2

## INTERNATIONAL SEARCH REPORT

| | International application No. |
|---|---|
| | **PCT/KR2023/016898** |

### A. CLASSIFICATION OF SUBJECT MATTER

**H01M 10/0567**(2010.01)i; **H01M 4/525**(2010.01)i; **H01M 4/505**(2010.01)i; **H01M 4/62**(2006.01)i; **H01M 10/0525**(2010.01)i; **H01M 50/105**(2021.01)i

According to International Patent Classification (IPC) or to both national classification and IPC

### B. FIELDS SEARCHED

Minimum documentation searched (classification system followed by classification symbols)

H01M 10/0567(2010.01); H01M 10/052(2010.01); H01M 10/0525(2010.01); H01M 10/42(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 전지 (lithium battery), 도전재 (conductive agent), 선형 (linear type), 점형 (dot type), 첨가제 (additive), 설톤 (sultone), 포스페이트 (phosphate)

### C. DOCUMENTS CONSIDERED TO BE RELEVANT

| Category* | Citation of document, with indication, where appropriate, of the relevant passages | Relevant to claim No. |
|---|---|---|
| Y | KR 10-2017-0111746 A (LG CHEM, LTD.) 12 October 2017 (2017-10-12)<br>See abstract; paragraphs [0137], [0145]-[0148] and [0165]-[0166]; and claims 1, 3, 4 and 12. | 1-14 |
| Y | KR 10-2020-0082557 A (ENCHEM CO., LTD.) 08 July 2020 (2020-07-08)<br>See abstract; paragraphs [0036]-[0037]; and claim 1. | 1-14 |
| A | KR 10-2019-0096649 A (SAMSUNG SDI CO., LTD.) 20 August 2019 (2019-08-20)<br>See entire document. | 1-14 |
| A | KR 10-2021-0008355 A (CONTEMPORARY AMPEREX TECHNOLOGY CO., LIMITED) 21 January 2021 (2021-01-21)<br>See entire document. | 1-14 |
| A | KR 10-2018-0075180 A (LG CHEM, LTD.) 04 July 2018 (2018-07-04)<br>See entire document. | 1-14 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016898**

| Patent document cited in search report | | | Publication date (day/month/year) | Patent family member(s) | | | Publication date (day/month/year) |
|---|---|---|---|---|---|---|---|
| KR | 10-2017-0111746 | A | 12 October 2017 | KR | 10-2124946 | B1 | 19 June 2020 |
| KR | 10-2020-0082557 | A | 08 July 2020 | | None | | |
| KR | 10-2019-0096649 | A | 20 August 2019 | KR | 10-2343706 | B1 | 24 December 2021 |
| | | | | US | 11088360 | B2 | 10 August 2021 |
| | | | | US | 2019-0252673 | A1 | 15 August 2019 |
| KR | 10-2021-0008355 | A | 21 January 2021 | CN | 110323487 | A | 11 October 2019 |
| | | | | CN | 110323487 | B | 21 September 2021 |
| | | | | CN | 113690481 | A | 23 November 2021 |
| | | | | CN | 113690481 | B | 05 August 2022 |
| | | | | EP | 3793013 | A1 | 17 March 2021 |
| | | | | EP | 3793013 | B1 | 23 November 2022 |
| | | | | EP | 4087006 | A1 | 09 November 2022 |
| | | | | EP | 4087006 | B1 | 24 May 2023 |
| | | | | HU | E060986 | T2 | 28 April 2023 |
| | | | | HU | E062213 | T2 | 28 October 2023 |
| | | | | JP | 2021-532531 | A | 25 November 2021 |
| | | | | JP | 7047138 | B2 | 04 April 2022 |
| | | | | KR | 10-2471591 | B1 | 25 November 2022 |
| | | | | PL | 3793013 | T3 | 30 January 2023 |
| | | | | US | 11329319 | B2 | 10 May 2022 |
| | | | | US | 2021-0119258 | A1 | 22 April 2021 |
| | | | | WO | 2021-004151 | A1 | 14 January 2021 |
| KR | 10-2018-0075180 | A | 04 July 2018 | KR | 10-2314626 | B1 | 20 October 2021 |

Form PCT/ISA/210 (patent family annex) (July 2022)

**EP 4 593 143 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220140777
- KR 1020230143341